# EUROPÄISCHE PATENTANMELDUNG

(11) **EP 2 407 859 A1**
(43) Veröffentlichungstag der Anmeldung: **18.01.2012**
(21) Anmeldenummer: 10169790.2
(22) Anmeldetag: 16.07.2010
(51) Int. Cl.: G06F 3/023, G06F 3/048

(54) **Dynamische Anpassung einer Bedienfläche auf einem Sensorbildschirm**

(71) Anmelder: Gigaset Communications GmbH, 81379 München (DE)
(72) Erfinder: Cahmak, Salih, 46395 Bocholt (DE); Mösker, Volker, 46419 Isselburg (DE)
(74) Vertreter: Hüttermann, Aloys

(57) **Zusammenfassung**

Die Erfindung betrifft ein Verfahren zur Erweiterung von Bedienflächen eines Sensorbildschirms, bei dem die Bedienflächen, deren Berührung für die folgende Eingabe besonders wahrscheinlich ist/sind, basierend auf einer Wahrscheinlichkeitsaussage oder des aktuellen Kontextes während der Eingabe eines Buchstabens oder einer Ziffer für die folgende Eingabe vergrößert beziehungsweise erweitert wird/werden, sowie Vorrichtungen, die einen Sensorbildschirm aufweisen, bei dem die Bedienflächen mit dem vorgenannten Verfahren vergrößert werden.

## Beschreibung

Die Erfindung betrifft die Verbesserung der Dateneingabe bei und Bedienbarkeit von Vorrichtungen, die einen Sensorbildschirm zur Eingabe von Daten und Befehlen aufweisen. Die vorliegende Erfindung betrifft insbesondere ein Verfahren mit dem die Bedienflächen auf einem Sensorbildschirm auf eine mit hoher Wahrscheinlichkeit zu erwartenden Eingabe angepasst werden. Die Erfindung umfasst auch Vorrichtungen mit einem Sensorbildschirm, bei dem die Bedienflächen auf eine mit hoher Wahrscheinlichkeit zu erwartenden Eingabe angepasst werden.

Ein Sensorbildschirm, auch "Touchscreen", "Touchinterface" oder "Tastschirm" genannt, ist ein Eingabegerät, bei dem durch Berührung von Teilen eines Bildes der Programmablauf eines technischen Gerätes, meist eines Computers, direkt gesteuert werden kann.

Die Bedienung von Computern, Mobiltelefonen und dergleichen erfolgt zunehmend über Sensorbildschirme. Dabei wird eine herkömmliche Tastatur und/oder Maus als Eingabevorrichtung durch eine entsprechende Darstellung/Funktionalität auf einem berührungsempfindlichen Bildschirm dargestellt. Der berührungsempfindliche Bildschirm (Sensorbildschirm) kann dann, beispielsweise bei der Eingabe von Texten, wie eine Tastatur verwendet werden, denn durch die Berührung des Bildschirms an der Bedienfläche, also der Stelle auf dem berührungsempfindlichen Bildschirm an der eine bestimmte Taste dargestellt ist, erfolgt die Eingabe des entsprechenden Zeichens. Dabei reicht es aus, wenn der Bildschirm an der entsprechenden Stelle berührt wird. Ein Drücken wie bei Tasten ist nicht erforderlich. Allerdings sind bei Sensorbildschirmen die verschiedenen Bedienflächen haptisch nicht voneinander zu unterscheiden, so dass es leicht zu ungenauen Treffern der Bedienflächen bei der Eingabe mit der Folge von unbeabsichtigten Fehleingaben kommen kann.

Der vorliegenden Erfindung lag daher die Aufgabe zugrunde, Möglichkeiten zur Verbesserung der Eingabe von Daten und/oder Befehlen über einen Sensorbildschirm bereit zu stellen.

Die Lösung dieser Aufgabe gelingt durch die Bereitstellung eines Verfahrens zur Erweiterung von Bedienflächen eines Sensorbildschirms, bei dem die Bedienflächen, deren Berührung für die folgende Eingabe besonders wahrscheinlich sind, basierend auf einer Wahrscheinlichkeitsaussage oder des aktuellen Kontextes während der Eingabe eines Buchstabens oder einer Ziffer für die folgende Eingabe vergrößert beziehungsweise erweitert werden.

Durch die Vergrößerung der Bedienflächen beziehungsweise Erweiterung der Bedienflächen für die am wahrscheinlichsten erfolgende Eingabe wird die Trefferwahrscheinlichkeit bei der Eingabe erhöht und auf diese Weise die Rate der Fehleingaben verringert. Damit einhergehend wird die Bedienbarkeit der Vorrichtung wesentlich verbessert.

Bislang sind die Bedienflächen eines Sensorbildschirms statisch. Das bedeutet, dass die Bedienflächen, also die verschiedenen Bereiche auf dem Bildschirm, die unterschiedlichen Tasten entsprechen, durch vordefinierte, also festgelegte Masken vorgegeben sind. Diese Masken bestimmen, in welchem Bereich der Sensorbildschirm berührt werden muss, damit eine Eingabe wirksam vorgenommen werden kann. Wird dieser Bereich, der sich mit der auf dem Sensorbildschirm dargestellten Bedienflächen deckt, berührt, ist die gewünschte Eingabe erfolgreich. Wird die Bedienfläche jedoch nicht getroffen, so erfolgt entweder keine oder eine nicht gewünschte Eingabe, die gegebenenfalls erst wieder rückgängig gemacht werden muss, bevor die beabsichtigte Eingabe erfolgen kann.

Im Unterschied zu den im Stand der Technik bekannten berührungsempfindlichen Bildschirmen mit statisch vorgegebenen Bedienflächen, ermöglicht das erfindungsgemäße Verfahren eine dynamische Größenanpassung der Bedienflächen eines Sensorbildschirms an die zu erwartende Eingabe.

Unter dynamischer Größenanpassung der Bedienflächen ist zu verstehen, dass aufgrund der Eingabe einer Ziffer oder eines Buchstabens über eine der auf dem Bildschirm vorhandenen Bedienflächen diejenigen Bedienflächen, die bei der folgenden Eingabe am wahrscheinlichsten benutzt werden, erweitert werden. Eine Erweiterung der Bedienfläche kann beispielsweise eine Vergrößerung der berührungsempfindlichen Bedienfläche sein. Hierbei kann die Bedienfläche nur in einer Richtung, in zwei Richtungen, in drei Richtungen oder in allen vier Richtungen vergrößert werden.

Durch die Erweiterung der Bedienflächen, die von dem Benutzer der Vorrichtung für die kommende Eingabe am wahrscheinlichsten berührt werden, wird die Trefferwahrscheinlichkeit deutlich erhöht. Dadurch kann die Zahl der unerwünschten Fehleingaben deutlich verringert und auf diese Weise die Bedienbarkeit der Vorrichtung verbessert werden, insbesondere von Vorrichtungen mit kleinen berührungsempfindlichen Bildschirmen, beispielsweise Mobiltelefone oder tragbare Spielekonsolen.

Bei bestimmten Ausführungsformen ist die Erweiterung der Bedienflächen für den Nutzer nicht sichtbar. Es kann aber auch von der Möglichkeit Gebrauch gemacht werden, die erweiterten Bedienflächen für den Nutzer sichtbar auf dem Sensorbildschirm darzustellen.

Die Erfindung erstreckt sich auch auf Vorrichtungen, die einen Sensorbildschirm aufweisen, bei dem die Bedienflächen, deren Berührung für die folgende Eingabe besonders wahrscheinlich sind, basierend auf einer Wahrscheinlichkeitsaussage oder des aktuellen Kontextes während der Eingabe eines Buchstabens oder einer Ziffer für die folgende Eingabe vergrößert beziehungsweise erweitert werden.

Bei der erfindungsgemäßen Vorrichtung kann es sich beispielsweise um einen Computer oder einen an einen Computer anschließbaren Bildschirm handeln. Besonders bevorzugte Vorrichtungen sind Computer, Mobiltelefone, Navigationsgeräte und Spielekonsolen.
Fig. 1 zeigt ein berührungsempfindliches Interface mit statischen Bedienflächen.
Fig. 2 zeigt ein berührungsempfindliches Interface mit dynamischer Größenanpassung der Bedienflächen, bei denen bestimmte Bedienflächen vergrößert sind.
Fig. 3 zeigt ein berührungsempfindliches Interface mit dynamischer Größenanpassung der Bedienflächen, bei denen bestimmte Bedienflächen kontextabhängig vergrößert sind.

Die dynamische Größenanpassung der Bedienflächen erfolgt auf Basis einer Wahrscheinlichkeitsaussage und/oder des aktuellen Kontextes, in dem die Eingabe erfolgt.

Die Wahrscheinlichkeitsaussage kann beispielsweise ähnlich dem in der EP 1 256 871 A2 beschriebenen und unter der Bezeichnung "T9" bekannten System zur erleichterten Texteingabe auf Mobiltelefonen erfolgen. Bei der Wahrscheinlichkeitsaussage wird softwaregesteuert der Umstand genutzt, dass auch kürzere Buchstabenfolgen nur Teil einer geringen Anzahl sinnvoller Wörter einer bestimmten Sprache sind. In bestimmten Fällen und/oder bei längeren Buchstabenfolgen können diese auch nur Teil eines einzigen sinnvollen Wortes sein. Bei dem erfindungsgemäßen Verfahren wird nach jeder Eingabe eines Buschstaben softwaregesteuert durch Abgleich mit einem integrierten Wörterbuch die Bedienflächen erweitert, die für Buchstaben stehen, welche in sinnvollen Wörtern unmittelbar nach den zuletzt eingegebenen Buchstaben folgen.

Bei einer bevorzugten Ausführungsform können Worte, die nicht in dem integrierten Wörterbuch enthalten sind, dem Wörterbuch hinzugefügt werden. Auf diese Weise kann sich jeder Nutzer sein individuelles Wörterbuch erstellen und seinen individuellen Anforderungen besonders anpassen.

Bei einer alternativen oder zusätzlichen Ausführungsform können beim Treffen der Wahrscheinlichkeitsaussage auch die Gewohnheiten des Nutzers berücksichtigt werden. Sofern der Nutzer bestimmte Wörter besonders häufig eingibt, können diese automatisch in das integrierte Wörterbuch übernommen werden und/oder die dynamische Größenanpassung der Bedienflächen berücksichtigt diese Worte besonders, beispielsweise indem sie nicht die Bedienflächen für alle Buchstaben erweitert, die auf die bestehende Buchstabenfolge folgend Teil eines sinnvollen Wortes wären, sondern nur die Bedienflächen für die Buchstaben erweitert, die auf die bestehende Buchstabenfolge folgend Teil des oder eines der häufig eingegebenen Worte ist. Bei dieser Ausführungsform kann sich die dynamische Größenanpassung der Bedienflächen den Gepflogenheiten des Nutzers anpassen und so die Bedienerfreundlichkeit für diesen Nutzer besonders verbessern.

Bei einer anderen alternativen oder zusätzlichen Ausführungsform kann die Erweiterung der Bedienflächen auch kontextabhängig erfolgen. Beispielsweise können, sofern der Nutzer eingibt oder das System erkennt, dass eine Telefonnummer eingegeben wird bzw. werden soll, nur die für Ziffern stehenden Bedienflächen erweitern, nicht aber die für Buchstaben stehenden Bedienflächen.

Ein anderes Beispiel für eine kontextabhängige Bedienflächenerweiterung sind die Postleitzahlen eines Staates. Sofern manuell eingestellt oder automatisch erkannt wird, dass eine Postleitzahl über den Sensorbildschirm eingegeben wird bzw. werden soll, werden nur die für Ziffern stehenden Bedienflächen erweitert. Wenn bestimmte Ziffern in den noch möglichen Postleitzahlen nicht vorkommen, können die für diese Ziffern stehenden Bedienflächen von der Erweiterung ausgenommen werden.

In einer besonderen Ausführungsform wird die eingegebene Ziffernfolge mit den besonders häufig verwendeten Ziffernfolgen und/oder Ziffernfolgen eines integrierten Telefonbuchs abgeglichen und nur die Bedienflächen erweitert, die für die folgende Ziffer der besonders häufig eingegebenen Ziffernfolge(n) oder Telefonbuchenträge stehen.

Die vorliegende Erfindung wird durch die im Folgenden gezeigten und diskutierten Figuren und Beispiele genauer erläutert. Dabei ist zu beachten, dass die Figuren und Beispiele nur beschreibenden Charakter haben und nicht dazu gedacht sind, die Erfindung in irgendeiner Form einzuschränken.

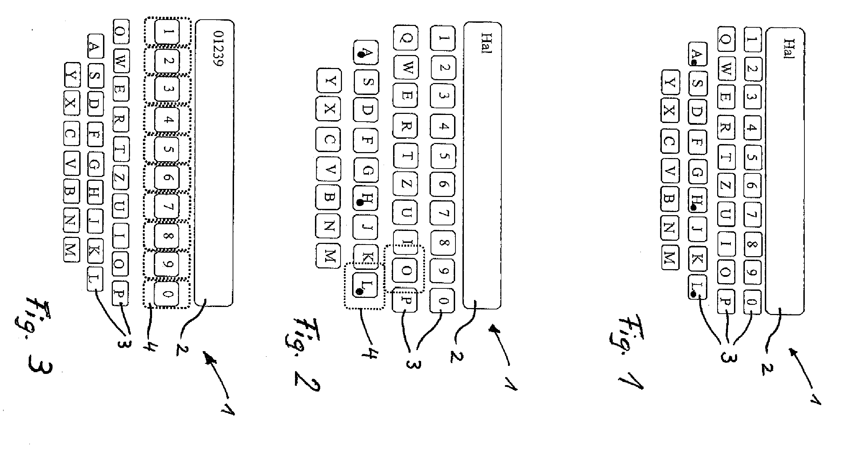

Fig. 1 zeigt schematisch eine Vorrichtung (1), die eine Anzeige (2) und ein Bedienfeld mit einer Vielzahl von Bedienflächen (3) aufweist. Durch aufeinander folgendes Berühren der Bedienflächen, die für die Buchstaben "H", "a" und "1" stehen, wurde die Buchstabenfolge "Hal" eingegeben, die in der Anzeige (2) wiedergegeben wird. Die Buschstabenfolge "Hal" ist beispielsweise Teil des Wortes "Hallo". Bei der in Figur 1 dargestellten Bedienfläche, das aus dem Stand der Technik bekannt ist, weist jede Bedienfläche (3) genau die Größe des sichtbaren Feldes für den entsprechenden Buchstaben oder die entsprechende Ziffer auf. Eine Berührung der Bedienfläche außerhalb der für den Buchstaben "L" stehenden Fläche würde nicht zur Eingabe des Buchstabens "1" führen. Die Größe der Bedienflächen bleibt konstant, das heißt sie bleibt ungeachtet der vorhergehenden Eingabe unverändert.

Fig. 2 zeigt die in Fig. 1 dargestellte Vorrichtung, umfassend eine Anzeige (2) und Bedienflächen (3). Bei der in Fig. 2 dargestellten Vorrichtung sind die Bedienflächen für die Eingabe der Buchstaben "1" und "o" erweitert. Die erweiterten Bedienflächen (4) werden durch die gestrichelt umrandeten Flächen um die Bedienflächen für die Buchstaben "1" und "o" dargestellt, da die Buchstabenfolge "Hal" mit hoher Wahrscheinlichkeit für das einzugebende Wort "Hallo" steht. Die Erweiterung der Bedienflächen ist nicht sichtbar für den Nutzer. Eine Berührung der erweiterten Bedienflächen für "1", also auch außerhalb des für den Buchstaben "1" dargestellten Fläche, würde zur Eingabe des Buchstaben "1" führen.

Figur 3 zeigt ebenfalls eine Vorrichtung (1), umfassend eine Anzeige (2) und ein Bedienfeld mit einer Vielzahl von Bedienflächen (3). Durch aufeinander folgendes Berühren der Bedienflächen, die für die Ziffern "0", "1", "2", "3" und "9" stehen, wurde die Ziffernfolge "01239" eingegeben, die in der Anzeige (2) wiedergegeben wird. Eine derartige Ziffernfolge steht mit hoher Wahrscheinlichkeit für eine Telefonnummer oder eine Postleitzahl. Daher ist die Wahrscheinlichkeit, dass bei der nächsten Eingabe eine Ziffer eingegeben wird, höher als die Wahrscheinlichkeit einer Buchstabeneingabe. Im Kontext der Eingabe von Telefonnummern oder Postleitzahlen sind nur die Bedienflächen für die Ziffern erweitert. Die erweiterten Bedienflächen (4) sind durch die gestrichelte Umrandung um die jeweiligen Ziffernfelder kenntlich gemacht.

## Patentansprüche

1. Verfahren zur Erweiterung von Bedienflächen eines Sensorbildschirms, **dadurch gekennzeichnet, dass** die Bedienfläche(n), deren Berührung für die folgende Eingabe besonders wahrscheinlich ist/sind, basierend auf einer Wahrscheinlichkeitsaussage oder des aktuellen Kontextes während der Eingabe eines Buchstabens oder einer Ziffer für die folgende Eingabe vergrößert beziehungsweise erweitert wird/werden.

2. Verfahren nach Anspruch 1, **dadurch gekennzeichnet, dass** nach jeder Eingabe eines Buschstaben softwaregesteuert durch Abgleich der erfolgten Eingaben mit einem integrierten Wörterbuch die Bedienflächen erweitert werden, die für Buchstaben stehen, welche in sinnvollen Wörtern unmittelbar nach dem zuletzt eingegebenen Buchstaben folgen.

3. Verfahren nach Anspruch 2, **dadurch gekennzeichnet, dass** beim Treffen der Wahrscheinlichkeitsaussage besonders häufig eingegebene Worte berücksichtigt werden.

4. Verfahren nach Anspruch 2 oder 3, **dadurch gekennzeichnet, dass** dem integrierten Wörterbuch Worte hinzugefügt werden können.

5. Verfahren nach Anspruch 3 oder 4, **dadurch gekennzeichnet, dass** besonders häufig eingegebene Worte automatisch in das integrierte Wörterbuch übernommen werden.

6. Verfahren nach einem der vorhergehenden Ansprüche, **dadurch gekennzeichnet, dass** die Vergrößerung der Bedienfläche(n) kontextabhängig erfolgt.

7. Verfahren nach Anspruch 6, **dadurch gekennzeichnet, dass** der Kontext aus der Gruppe ausgewählt ist, die Telefonnummern und Postleitzahlen umfasst.

8. Vorrichtung, umfassend einen Sensorbildschirm zur Eingabe von Daten oder zur Steuerung der Vorrichtung, **dadurch gekennzeichnet, dass** die Bedienfläche(n) des Sensorbildschirms, deren Berührung für die folgende Eingabe besonders wahrscheinlich ist/sind, basierend auf einer Wahrscheinlichkeitsaussage oder des aktuellen Kontextes während der Eingabe eines Buchstabens oder einer Ziffer für die folgende Eingabe vergrößert beziehungsweise erweitert wird/werden.

9. Vorrichtung nach Anspruch 8, **dadurch gekennzeichnet, dass** die Vorrichtung aus der Gruppe ausgewählt ist, die Computer, Mobiltelefone, Navigationsgeräte und Spielekonsolen umfasst.
